# EUROPEAN PATENT APPLICATION

(11) **EP 3 654 685 A1**
(43) Date of publication of application: **20.05.2020**
(21) Application number: 18306491.4
(22) Date of filing: 14.11.2018
(51) Int. Cl.: H04W 12/06

(54) **A METHOD FOR TRANSFERRING A MSISDN FROM A FIRST TO A SECOND SECURE ELEMENT AND CORRESPONDING COMPUTER PROGRAM**

(71) Applicant: Thales Dis France SA, 92190 Meudon (FR)
(72) Inventor: KORKMAZ, Nagy, 13881 GEMENOS cedex (FR); GROS, Jean-François, 13881 GEMENOS cedex (FR)
(74) Representative: Scheer, Luc

(57) **Abstract**

The invention concerns a method for transferring a MSISDN allocated to a subscription from a first (50) to a second (54) secure element, the method comprising:
- during an enrolment phase of the first secure element (50) cooperating with a terminal, transferring from the first secure element (50) to a remote server (51), a hash called hash (Secretlnfo_1), of a secret information entered by a user in the terminal and the MSISDN of the subscription of the user;
- Store the hash (Secretlnfo_1) associated to the MSISDN in the server (51);
- When the second secure element (54) is for the first time activated in a terminal, after the user having entered the MSISDN to be transferred and the secret information, the second information being hashed and called hash (Secretlnfo_2) for the second secure element (54):
- Compare the hash (Secretlnfo_1) and the hash (Secretlnfo_2) and if the hash (Secretlnfo_2) corresponds to the hash (Secretlnfo_1) for this MSISDN, assigning at the level of the operator network (53) a subscription identifier of the second secure element (54) to this MSISDN.

## Description

The present invention concerns the telecommunication domain and more precisely a method for changing a secure element like a SIM card (Subscriber Identity Module) while keeping the same MSISDN (Mobile Subscriber Integrated Services Digital Number). The MSISDN is a phone number.

The invention concerns the process of verifying seamlessly and in a secure way the end user identity when he wants himself to perform himself a swap (self-care) from an old SIM (for example lost or broken) to a new SIM by keeping the same MSISDN and inherit all the services existing on the old SIM to be moved on the new SIM.

In some countries, operators are offering to the end user a "SIM SWAP service" which means changing their old SIM to a new one by keeping the same MSISDN.

The issue of these operators is to verify the identity of the end user requesting the "SIM SWAP service". For this, the end user has to go to a point of sales of his MNO (Mobile Network Operator) with several ID documents justifying that he is the owner of the old SIM (and associated MSISDN). Because only few points of sales are capable to perform this process, this implies long queues and poor user experience leading end-user to churn. This represents a loss of profits for the MNO.

The problem solved is to enable the user to perform himself the sim swap without going to a point of sale, but still ensure that the end-user is the owner of the requested MSISDN in a secure and user friendly manner.

The traditional way to solve this problem is to ask the user a "security code and private questions" which the user has previously defined. Once the security code and private questions/answers are defined by the user, they are sent and stored in association with the MSISDN in the MNO back-end so that they can be verified when the user requests to perform a SIM swap and keep his MSISDN. The issue with this solution is that the security code and the private answers are sent over the air and stored in MNO back-end. This is subject to privacy and security issues.

The present invention proposes a solution to this problem.

More precisely, the invention proposes a method for transferring a MSISDN allocated to a subscription from a first to a second secure element, the method comprising:
- during an enrolment phase of the first secure element cooperating with a terminal, transferring from the first secure element to a remote server, a hash called hash (Secretlnfo_1), of a secret information entered by a user in the terminal and the MSISDN of the subscription of the user;
- Store the hash (Secretlnfo_1) associated to this MSISDN in the server;
- When the second secure element is for the first time activated in a terminal, after the user having entered the MSISDN to be transferred and the secret information, the second information being hashed and called hash (Secretlnfo_2) for the second secure element:
- Compare the hash (Secretlnfo_1) and the hash (Secretlnfo_2) and if the hash (Secretlnfo_2) corresponds to the hash (Secretlnfo_1) for this MSISDN, assigning at the level of the operator network a subscription identifier of the second secure element to the MSISDN.

In a first embodiment, the comparison is done at the level of the remote server and the hash (Secretlnfo_2) is sent from the second secure element to the remote server.

In a second embodiment, the comparison is done at the level of the second secure element and the hash (Secretlnfo_1) is sent from the remote server to the second secure element. Preferably, the first or second secure elements are one of:
- A UICC,
- A eUICC,
- A iUICC,
- A device application,
- A trusted execution environment.

Advantageously, the secret information is one of:
- An hexadecimal code;
- An answer to at least one question accompanied with a reference of the question;
- A passphrase.

Preferably, the subscription identifier is an IMSI.

The invention also concerns a computer program product to be used for transferring a MSISDN allocated to a subscription from a first to a second secure element, the computer program product being configured to be operable to:
- during an enrolment phase of the first secure element cooperating with a terminal, transferring from the first secure element to a remote server, a hash called hash (Secretlnfo_1), of a secret information entered by a user in the terminal and the MSISDN of the subscription of the user;
- when the second secure element is for the first time activated in a terminal, after the user having entered the MSISDN to be transferred and the secret information, the second information being hashed and called hash (Secretlnfo_2) for the second secure element, compare the hash (Secretlnfo_1) and the hash (Secretlnfo_2) and if the hash (Secretlnfo_2) corresponds to the hash (Secretlnfo_1) for this MSISDN, assigning at the level of the operator network a subscription identifier of the second secure element to this MSISDN.

Other features and advantages of the present invention will appear in the next description of the figures that represent:
- Figure 1 an example of an enrolment of a user by using a secret information;
- Figure 2 an example of an authentication of a user by the server of figure 1;
- Figure 3 an example of an authentication of a user by the second secure element of figure 2.

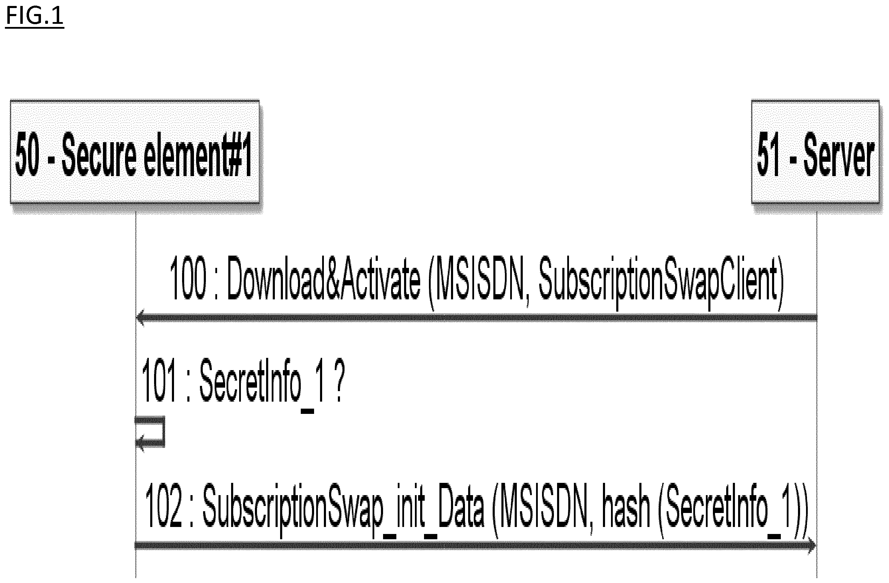

Figure 1 represents an example of enrolment of a user by using a secret information.

Two essential elements of a telecommunication network are here represented: A secure element 50, called first secure element or Secure element#1 and a remote server 51. Secure element#1 may already contain an application (an applet called SubscriptionSwapClient) and cooperates with a terminal (a smartphone, a mobile phone, a PDA,...). Secure element#1 corresponds to a secure element already in possession of its user (an "old" secure element). The remote server 51 is typically an AOTA (Advanced OTA) platform and contains an application called SimSwap Component.

It is here supposed that the SubscriptionSwapClient is not installed in Secure element#1 50.

Therefore, the first step 100 of this enrolment consists in downloading the SubscriptionSwapClient applet in the Secure element#1 50. A first message "Download&Activate (MSISDN, SubscriptionSwapClient)" is therefore sent from the SimSwap Component to the SubscriptionSwapClient.

Of course, if the applet is already installed in the Secure element#1 50, it is not necessary to download it. It is only necessary to activate it.

After having activated this application, the user is invited to enter (step 101) a secret information, called Secretlnfo_1.

Secretlnfo_1 can for example be: An hexadecimal code, an answer to at least one question accompanied with a reference of this question, a passphrase... the most important being that only the user knows this Secretlnfo_1.

At step 102 a message containing the MSISDN of the Secure element#1 50 and a hash of the Secretlnfo_1 "SubscriptionSwap_init_Data (MSISDN, hash (Secretlnfo_1))" is sent to the server 51. The server 51 stores this MSISDN and the corresponding associated hash of Secretlnfo_1. The hash is for example a MD5 of SHA-256 of Secretlnfo_1.

So, at this stage, the server stores the MSISDN of Secure element#1 and the associated hash of a secret info entered by the user.

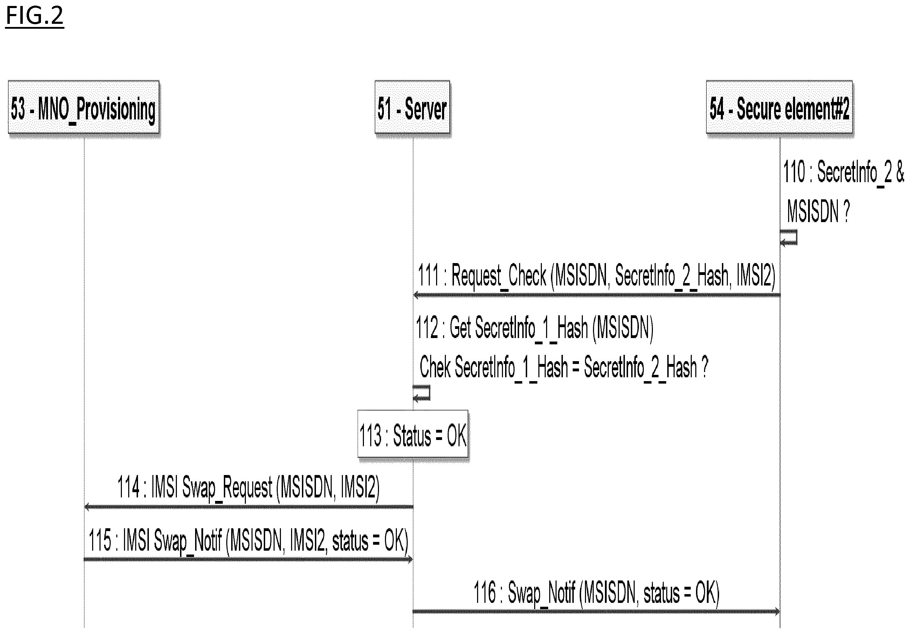

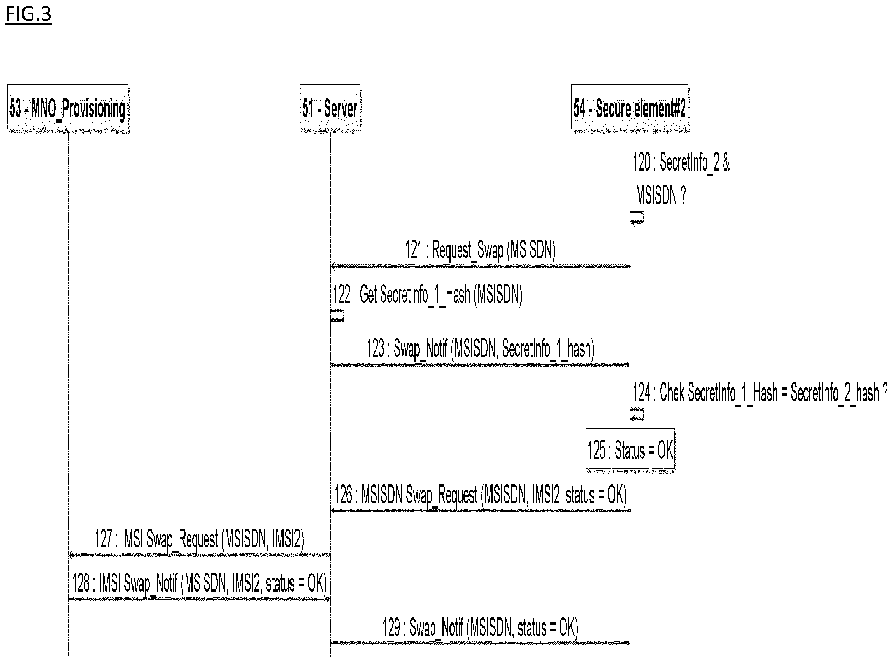

The second step of the invention consists in transferring a MSISDN allocated to the subscription of the user from this first secure element 50 to a second secure element 54, as shown in figures 2 or 3. This transfer can only be done if the user is authenticated.

For that, the hash of Secretlnfo_1 is compared to a hash of a Secretlnfo_2 entered by the user having bought a new UICC or a new terminal comprising a eUICC, a iUICC, a TEE or an application allowing him to communicate with his MNO after having for example lost or broken his old UICC, but by keeping his MSISDN.

In a first embodiment, this comparison is done at the level of the server 50 as shown in figure 2. Figure 2 is an example of an authentication of a user by the server of figure 1.

In this figure, a Secure element#2 54 cooperates with the terminal of the user. It can be the same or another terminal. It is supposed that Secure element#2 54 already comprises the application SubscriptionSwapClient. A MNO_Provisioning system 53 is here also involved.

The first step 110 can be launched when the second secure element Secure element#2 54 is for the first time activated in the terminal with which it cooperates. This step consists in asking to the user to enter his (old) MSISDN and Secretlnfo_1 in the interface of the terminal. Here, the user enters Secretlnfo_2 that should be equal to Secretlnfo_1 if future authentication will be decided as positive.

At step 111, a message "Request_Check (MSISDN, Secretlnfo_2_Hash, IMSI2)" is sent to the server 51. IMSI2 corresponds to the IMSI of secure element 54 and Secretlnfo_2_Hash corresponds to the hash of Secretlnfo_2.

At step 112, thanks to the received MSISDN, the server retrieves the hash of Secretlnfo_1 and verifies if the received hash of Secretlnfo_2 is equal to the hash of Secretlnfo_1.

If yes, at step 113, authentication is successful (the user knows his previous MSISDN and the Secretlnfo_1) and the server sends (step 114) to the MNO_Provisioning system 53 an IMSI swap request comprising the requested MSISDN and IMSI2 (message IMSI Swap_Request (MSISDN, IMSI2)). At step 115, the MNO_Provisioning system 53 attributes to IMSI2 the requested MSISDN and sends to the server 51 a message IMSI Swap_Notif (MSISDN, IMSI2, status = OK) indicating that the swap has been done (IMSI2 corresponds now to MSISDN). IMSI2 is here a subscription identifier. It could also be another unique value identifying the Secure element#2 54.

So in this example, a comparison is done between the hash of Secretlnfo_1 and the hash of SecretInfo_2 at the level of the remote server 51 and hash (SecretInfo_2) is sent from the second secure element 54 to the remote server 51.

In another embodiment, shown in figure 3, this comparison is done at the level of the second secure element and the hash (Secretlnfo_1) is sent from the remote server 51 to the second secure element.

In figure 3, step 120 is the same as step 110: The user enters his (old) MSISDN and, at this stage or later on, Secretlnfo_2.

At step 121, a message of swap request containing this MSISDN is sent to the server 51. The server then (step 122) retrieves that hash of Secretlnfo_1 corresponding to this MSISDN and sends (step 123) a swap notification message containing this hash to the Secure element#2 54. The secure element (step 124) then checks if hash of Secretlnfo_2 is equal to the hash of Secretlnfo_1. If the test is positive (step 125), the secure element 54 sends (step 126) to the server 51 a message (MSISDN Swap_Request (MSISDN, IMSI2, status = OK)) indicating that the two hash are identical and the server 51 sends to the MNO_Provisioning system 53 a request (step 127) to associate to IMSI2 this MSISDN.

Steps 128 and 129 are identical to steps 115 and 116 of figure 2.

The first or second secure elements 50 and 54 can be one of a UICC, a eUICC, a iUICC. a device application or a trusted execution environment (TEE) for example.

When the Secretlnfo_1 is an answer to a question, only the answer to this question is hashed and sent to the server 51 along with (in clear) the number of the question (there can be a plurality, for example ten, different questions). So the server can later on retrieve this hash, thanks to the number of the question.

The invention also concerns a computer program product to be used for transferring a MSISDN allocated to a subscription from a first 50 to a second 54 secure element, the computer program product being configured to be operable to:
- during an enrolment phase of the first secure element 50 cooperating with a terminal, transferring from the first secure element 50 to a remote server 51, a hash called hash Secretlnfo_1, of a secret information entered by a user in the terminal and the MSISDN of the subscription of the user;
- when the second secure element 54 is for the first time activated in a terminal, after the user having entered the MSISDN to be transferred and the secret information, the second information being hashed and called hash Secretlnfo_2 for the second secure element 54, compare the hash Secretlnfo_1 and the hash Secretlnfo_2 and if the hash Secretlnfo_2 corresponds to the hash Secretlnfo_1 for this MSISDN, assigning at the level of the operator network 53 a subscription identifier of the second secure element 54 to this MSISDN.

The main advantages of the invention are the followings:
- The invention enables not to send over the air nor to store in the MNO back end secrets in clear;
- User friendly solution with only one end-user interaction for the Secretlnfo;
- Security is based on the SIM keys for OTA and on hash values;
- No specific network authentication flows are required.

## Claims

1. A method for transferring a MSISDN allocated to a subscription from a first (50) to a second (54) secure element, said method comprising:
- during an enrolment phase of the first secure element (50) cooperating with a terminal, transferring from said first secure element (50) to a remote server (51), a hash called hash (Secretlnfo_1), of a secret information entered by a user in said terminal and the MSISDN of the subscription of said user;
- Store said hash (Secretlnfo_1) associated to said MSISDN in said server (51);
- When said second secure element (54) is for the first time activated in a terminal, after said user having entered said MSISDN to be transferred and said secret information, said second information being hashed and called hash (Secretlnfo_2) for said second secure element (54):
- Compare said hash (Secretlnfo_1) and said hash (Secretlnfo_2) and if said hash (Secretlnfo_2) corresponds to said hash (Secretlnfo_1) for the said MSISDN, assigning at the level of the operator network (53) a subscription identifier of said second secure element (54) to said MSISDN.

2. Method according to claim 1 wherein said comparison is done at the level of said remote server (51) and wherein said hash (Secretlnfo_2) is sent from said second secure element (54) to said remote server (51).

3. Method according to claim 1 wherein said comparison is done at the level of said second secure element (54) and wherein said hash (Secretlnfo_1) is sent from said remote server (51) to said second secure element (54).

4. Method according to any of the claims 1 to 3 wherein said first or second secure elements are one of:
- A UICC,
- A eUICC,
- A iUICC,
- A device application,
- A trusted execution environment.

5. Method according to any of the claims 1 to 4 wherein said secret information is one of:
- An hexadecimal code;
- An answer to at least one question accompanied with a reference of said question;
- A passphrase.

6. Method according to any of the claims 1 to 5 wherein said subscription identifier is an IMSI.

7. A computer program product to be used for transferring a MSISDN allocated to a subscription from a first (50) to a second (54) secure element, the computer program product being configured to be operable to:
- during an enrolment phase of the first secure element (50) cooperating with a terminal, transferring from said first secure element (50) to a remote server (51), a hash called hash (Secretlnfo_1), of a secret information entered by a user in said terminal and the MSISDN of the subscription of said user;
- when said second secure element (54) is for the first time activated in a terminal, after said user having entered said MSISDN to be transferred and said secret information, said second information being hashed and called hash (Secretlnfo_2) for said second secure element (54), compare said hash (Secretlnfo_1) and said hash (Secretlnfo_2) and if said hash (Secretlnfo_2) corresponds to said hash (Secretlnfo_1) for the said MSISDN, assigning at the level of the operator network (53) a subscription identifier of said second secure element (54) to said MSISDN.
